# EUROPEAN PATENT APPLICATION

(11) **EP 4 614 698 A1**
(43) Date of publication of application: **10.09.2025**
(21) Application number: 23885374.1
(22) Date of filing: 08.09.2023
(51) Int. Cl.: H01M 50/213, H01M 50/289, H01M 50/291, H01M 50/342, H01M 50/367, H01M 50/505, H01M 50/583

(54) **BATTERY PACK**

(30) Priority: 31.10.2022 JP 2022174761
(71) Applicant: Panasonic Energy Co., Ltd., Osaka 570-8511 (JP)
(72) Inventor: YOSHIKAWA, Kenta, Osaka 571-0057 (JP)
(74) Representative: Eisenführ Speiser
(86) International application number: PCT/JP2023/032787
(87) International publication number: WO 2024/095608

(57) **Abstract**

The present disclosure provides a battery pack capable of reducing breakage of a lead plate when high-temperature and high-pressure gas is discharged from a secondary battery cell.

A battery pack 100 includes a plurality of secondary battery cells 1, each of which has a cylindrical outer can 1b and includes one or more gas discharge ports 1a on a circular end face 1c of the outer can 1b, an outer case 10 that stores the plurality of secondary battery cells 1, and one or more lead plates 30 coupled to one or more end faces 1c of the plurality of secondary battery cells 1. The battery pack 100 also includes a path defining portion 25 that defines a gas discharge path 40, disposed to face at least one of the one or more gas discharge ports 1a. The path defining portion 25 defines a first path 41 along a first direction that extends from a center toward a circumference of a circular shape of an end face 1c of the outer can 1b, and a second path 42 along a second direction that extends from the circumference toward the center of the circular shape of the end face 1c of the outer can 1b.

## Description

### TECHNICAL FIELD

The present disclosure relates to a battery pack.

### BACKGROUND ART

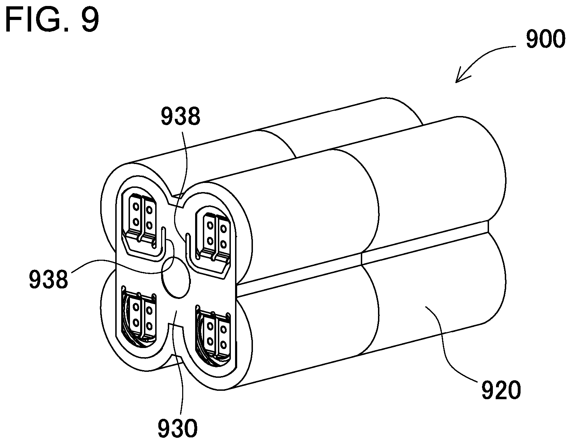

A battery pack containing a plurality of secondary battery cells stored in an outer case has been used to drive an electrical device by a rechargeable secondary battery, such as a lithium-ion secondary battery (e.g., Patent Literature 1). The perspective view in FIG. 9 shows an example of a battery pack in which a plurality of secondary battery cells in cylindrical outer cans are connected in series or in parallel to achieve high output and capacity. In this battery pack, the end faces of the cylindrical outer cans are aligned in the same plane, and a flat lead plate 930 is welded over these end faces of the outer cans of the respective secondary battery cells. Also, a fuse is provided in battery packs to protect them from unintended large currents. For example, in the example of the lead plate 930 in FIG. 9, a fuse structure 938 is provided by forming a narrow-width region in a part of the lead plate 930 to locally increase the resistance. When a large current flows, the fuse structure 938 is cut off as it melts due to Joule heat.

In such a battery pack, each secondary battery cell has a gas discharge port in its outer can to allow high-temperature and high-pressure gas to be discharged from the outer can in the event that some malfunction occurs and the inside of the outer can is highly pressurized. For example, in a secondary battery cell with a cylindrical outer can, a gas discharge port is opened on an end face of the cylindrical outer can. For such a battery pack containing secondary battery cells, if high-temperature and high-pressure gas is ejected from the gas discharge port of one of the secondary battery cells, it is necessary to quickly discharge the gas from the inside to the outside of the outer case.

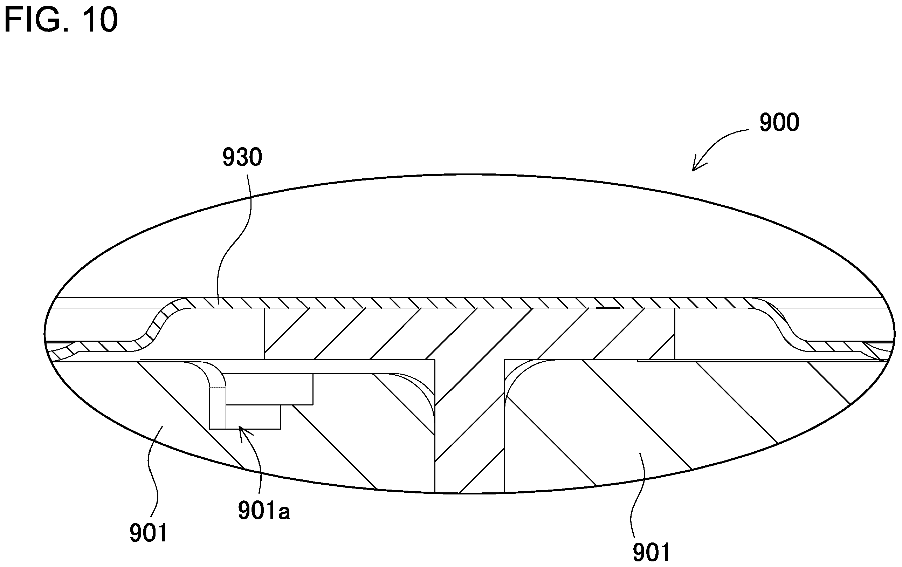

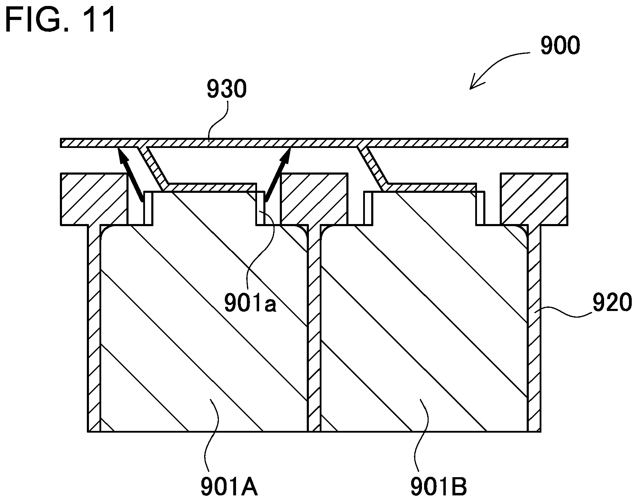

However, in a battery pack 900 in which the end faces of adjacent secondary battery cells are coupled to each other via the lead plate 930, which is shown in the perspective view in FIG. 9, the lead plate 930 is welded over the end faces of the secondary battery cells 901 as shown in the cross-sectional view in FIG. 10. In this state, the gas discharge port opened on the end face of the outer can is covered by the lead plate 930. As shown in FIG. 11, if high-temperature and high-pressure gas is unexpectedly discharged from the gas discharge port 901a of one of the secondary battery cells 901 in this state, the lead plate is heated by the high temperature and further exposed to the high pressure gas. This may result in breakage of the lead plate. In this case, if the lead plate break and its electrical resistance increases, the current value decreases, and the fuse structure 938 may not operate. If the fuse structure 938 does not operate, the energization of other secondary battery cells can not be blocked, and the Joule heat generated by the energization may cause abnormal heat generation in the secondary battery cell. This may lead to an increased number of defective secondary battery cells.

It has also been found through tests conducted by the present inventor that, in addition, the high-temperature and high-pressure gas discharged from the secondary battery cell 901A may be reflected upon hitting the back side of the lead plate 930 and may possibly impinge on an end face of the adjacent secondary battery cell 901B. This condition in which the end face of the normal secondary battery cell 901B is exposed to the high-temperature and high-pressure gas is considered abnormal, and may pose a risk of the abnormal secondary battery cell further propagating to other cells.

### CITATION LIST

### PATENT LITERATURE

Patent Literature 1: Japanese Unexamined Patent Application Publication No. 2021-174673

### SUMMARY OF INVENTION

### TECHNICAL PROBLEM

One of the objects of the present disclosure is to provide a battery pack capable of reducing breakage of the lead plate and adverse effects on adjacent secondary battery cells even when high-temperature and high-pressure gas is discharged from a secondary battery cell.

### SOLUTION TO PROBLEM

A battery pack according to one embodiment of the present invention includes a plurality of secondary battery cells, each of which has a cylindrical outer can and includes one or more gas discharge ports on a circular end face of the outer can, an outer case that stores the plurality of secondary battery cells, and one or more lead plates coupled to one or more end faces of the plurality of secondary battery cells. The battery pack includes a path defining portion that defines a gas discharge path, disposed to face at least one of the one or more gas discharge ports. The path defining portion defines a first path along a first direction that extends from a center toward a circumference of a circular shape of an end face of the outer can, and a second path along a second direction that extends from the circumference toward the center of the circular shape of the end face of the outer can.

### ADVANTAGEOUS EFFECTS OF INVENTION

According to the battery pack of one embodiment of the present invention, even if high-temperature and high-pressure gas is unexpectedly discharged from the gas discharge port of one of the secondary battery cells, it is possible to avoid an event that high-temperature and high-pressure gas is directly discharged to the lead plate. This contributes to improved safety. Specifically, by guiding the gas to the gas discharge path facing at least one of the gas discharge ports and reducing the pressure of the gas by increasing the pressure loss by providing this gas discharge path with a first path along a first direction that extends from the center toward the circumference of the circular shape of the end face of the outer can, and a second path along a second direction that extends from the circumference toward the center, and also by causing the gas to flow towards the lead plate, it is possible to prevent breakage of the lead plate, and prevent the gas reflected by the lead plate coupling end faces of adjacent secondary battery cells from propagating to the end face of the adjacent secondary battery cell to heat the end face.

### BRIEF DESCRIPTION OF DRAWINGS

FIG. 1 is a perspective view of a battery pack according to Embodiment 1 of the present invention;
FIG. 2 is an exploded perspective view of the battery pack of FIG. 1;
FIG. 3 is a perspective view of the battery module of FIG. 2;
FIG. 4 is a perspective view of the battery module of FIG. 3, viewed from the back;
FIG. 5 is an exploded perspective view of the battery module of FIG. 3 with the lead plate detached;
FIG. 6 is an exploded perspective view of the battery module of FIG. 4 with the lead plate detached;
FIG. 7 is an exploded perspective view of the battery module of FIG. 5 with the battery holder detached;
FIG. 8 is a cross-sectional view of the battery module of FIG. 3 taken along the line VIII-VIII in FIG. 3;
FIG. 9 is a perspective view of a battery pack according to a comparative example;
FIG. 10 is a schematic cross-sectional view showing a portion having a gas discharge port of the battery pack of FIG. 9;
FIG. 11 is a schematic cross-sectional view of the battery pack of FIG. 9 in a state in which gas is reflected by a lead plate when gas is discharged from one of the secondary battery cells;
FIG. 12 is a perspective view taken along the line XII-XII in FIG. 7;
FIG. 13 is an enlarged perspective view cut at the line XIII-XIII in FIG. 12;
FIG. 14 is a perspective projection view of a path defining portion of the battery module of FIG. 5;
FIG. 15 is an enlarged perspective front view of a lead plate welding portion of the battery module of FIG. 3;
FIG. 16 is a perspective front view of FIG. 15 with the lead plate detached;
FIG. 17 illustrates the battery holder of FIG. 16, viewed from the back;
FIG. 18 is an enlarged perspective front view of the portion enclosed by the lower left circle XVIII in FIG. 16;
FIG. 19 is an enlarged perspective front view of the portion enclosed by the upper right circle XIX in FIG. 16;
FIG. 20 is an enlarged view of a portion of a path defining portion of the battery holder of FIG. 17;
FIG. 21 is a graph showing pressure of gas at each portion in FIG. 20;
FIG. 22 is a graph showing flow rate of gas at each portion in FIG. 20;
FIG. 23 is a schematic diagram of a path defining portion of a battery pack according to Embodiment 2;
FIG. 24 is a schematic diagram of a path defining portion of a battery pack according to Embodiment 3;
FIG. 25 is a schematic diagram of a path defining portion of a battery pack according to Embodiment 4;
FIG. 26 is a schematic diagram of a path defining portion of a battery pack according to Embodiment 5; and
FIG. 27 is a schematic diagram of a path defining portion of a battery pack according to Embodiment 6.

### DESCRIPTION OF EMBODIMENTS

The embodiments of the present invention may be specified by the following configurations and features.

A battery pack according to another embodiment of the present invention is configured by that, as recited in any of foregoing embodiments, the lead plate includes a fuse structure that fractures when a current of equal to or more than a predetermined value is applied. This configuration makes it possible to avoid an event that, when high-temperature and high-pressure gas is unexpectedly discharged from a secondary battery cell, the high-temperature and high-pressure gas directly impinges on the lead plate with the fuse structure, causing the fuse structure to fail to operate properly. This contributes to improved reliability.

Further, a battery pack according to another embodiment of the present invention is configured by that, as recited in any of foregoing embodiments, it comprises a battery holder that holds the plurality of secondary battery cells. The path defining portion is formed on an inner face of the battery holder facing an end face of the secondary battery cells.

A battery pack according to still another embodiment of the present invention is configured by that, as recited in any of foregoing embodiments, the path defining portion includes one or more baffle plates extending between the center and the circumference of the circular shape of the end face of the outer can. The first path is provided on one side along an extension direction of the one or more baffle plates and the second path is provided on another side along the extension direction. In the one or more baffle plates, a first guide port leading to the first path and a second guide port leading to the second path are provided respectively on both sides of a first end face that faces the center of the circular shape of the end face of the outer can, and the first path and the second path are connected on a side of a second end face that faces the circumference of the circular shape of the end face of the outer can. This configuration makes it possible to guide the high-temperature and high-pressure gas to the first path and/or the second path from both or either of the first guide port and the second guide port, allowing the flow path of the gas discharge path to extend. It is also possible to cause momentum loss by changing the direction of the gas at the conjunction between the first path and the second path, thereby reducing the pressure of the gas. Further, by guiding the gas from both the first guide port and the second guide port, it is possible to cause the high-pressure gases to collide with each other in the middle of the gas guide path to generate a vortex flow, leading to reduction in the pressure.

A battery pack according to yet another embodiment of the present invention is configured by that, as recited in any of foregoing embodiments, the first path is defined to have an opening width that becomes narrower from the first guide port toward the side of the second end face, and the second path is defined to have an opening width that becomes narrower from the second guide port toward the side of the second end face. With this configuration, the flow rate of the high-temperature and high-pressure gas guided from either the first guide port or the second guide port increases and the pressure of the gas decreases due to the gradual reduction of the flow path area. Then, when the gas moves toward the second guide port or the first guide port, the gas expands due to the expansion of the flow path area, and the pressure increases. This is a reverse pressure gradient state, which results in an increase in the pressure loss and a decrease in the pressure of the gas.

A battery pack according to yet another embodiment of the present invention is configured by that, as recited in any of foregoing embodiments, the first guide port and the second guide port are defined by curved faces. This configuration makes it difficult to generate a pressure loss at the first guide port and the second guide port, making it easier to guide the gas to the gas discharge path.

A battery pack according to yet another embodiment of the present invention is configured by that, as recited in any of foregoing embodiments, a plurality of the baffle plates are provided.

A battery pack according to yet another embodiment of the present invention is configured by that, as recited in any of foregoing embodiments, the plurality of the baffle plates are disposed spaced apart from each other by an equal first distance, and the one or more gas discharge ports include a plurality of gas discharge ports that are spaced apart from each other by an equal second distance that is different from the first distance.

A battery pack according to yet another embodiment of the present invention is configured by that, as recited in any of foregoing embodiments, a number "m" that represents the number of the gas discharge ports and a number "n" that represents the number of the baffle plates are coprime. With this configuration, the first guide port and the second guide port defined by the baffle plate always face the gas discharge port at a location regardless of the orientation in the rotation direction of the secondary battery cell, making it possible to reliably guide the high-temperature and high-pressure gas to the first guide port and the second guide port. In other words, this provides an advantage that there is no need for setting the relative position of the rotation direction of the secondary battery cell and the baffle plate, thereby simplifying the battery pack assembly process.

A battery pack according to yet another embodiment of the present invention is configured by that, as recited in any of foregoing embodiments, the baffle plates are radially disposed with respect to the center of the circular shape of the end face of the outer can, and the path defining portion includes a wall portion that is spaced apart from each of the baffle plates that are radially disposed and formed in a mountain-like shape along an outer edge of each baffle plate, and the gas discharge path is formed in a U-shape between the wall portion and each baffle plate. **In** this configuration with the radially disposed baffle plate, a pressure loss is generated in the ejected gas. As a result, the total pressure of the ejected gas impinging on the lead plate is reduced, thereby reducing the breakage of the lead plate.

A battery pack according to yet another embodiment of the present invention is configured by that, as recited in any of foregoing embodiments, an opening width between the second end face of each baffle plate and the wall portion is narrower than the first guide port and the second guide port.

Embodiments of the present invention are described below with reference to the drawings. However, the embodiments shown below are only examples to illustrate the technical concepts of the present invention, and the present invention is not limited to these embodiments. Further, this specification does not limit any member in the claims to the members described in these embodiments. **In** particular, unless otherwise specified, the dimensions, materials, shapes, relative positions, etc. of the components described in these embodiments are intended to be illustrative and not to limit the scope of the present invention. It should be noted that the sizes, positional relationships, etc. of the members shown in the drawings may be exaggerated for clarity in the description. Furthermore, in the following description, the same names and reference numbers indicate the same or similar members, and detailed descriptions are omitted as appropriate. Furthermore, each element constituting the present invention may be implemented such that a plurality of elements are formed from the same member, allowing a single member to serve as a plurality of elements, or that, conversely, the function of a single member is shared among a plurality of members.

The battery pack of the present invention can be used, for example, in self-propelled robots for home delivery, electric carts for home delivery and golf courses, electric scooters, construction machinery, and as a power source for driving vehicles such as hybrid and electric vehicles. In addition, the battery pack of the present invention can be used as a power source for driving electric assist bicycles and for portable electrical devices such as radios, electric cleaners, and power tools. Alternatively, for stationary energy storage applications, battery pack of the present invention can also be used as a backup power source for servers, as well as a power supply for households, business establishments, and factories. A battery pack used as a power source for driving a self-propelled robot is described below as one embodiment of the present invention.

### [EMBODIMENT 1]

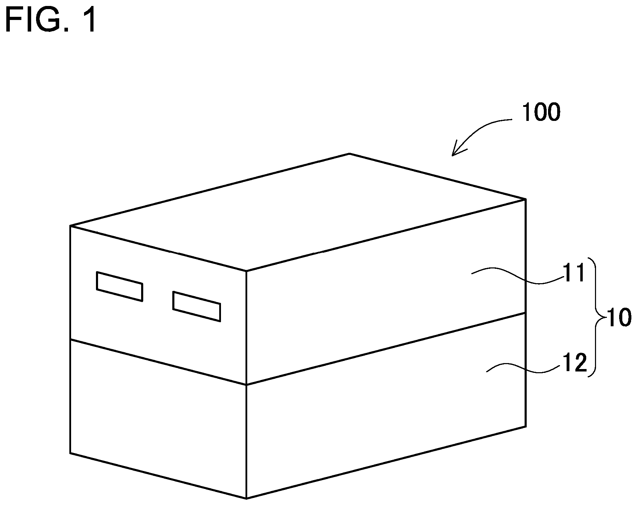

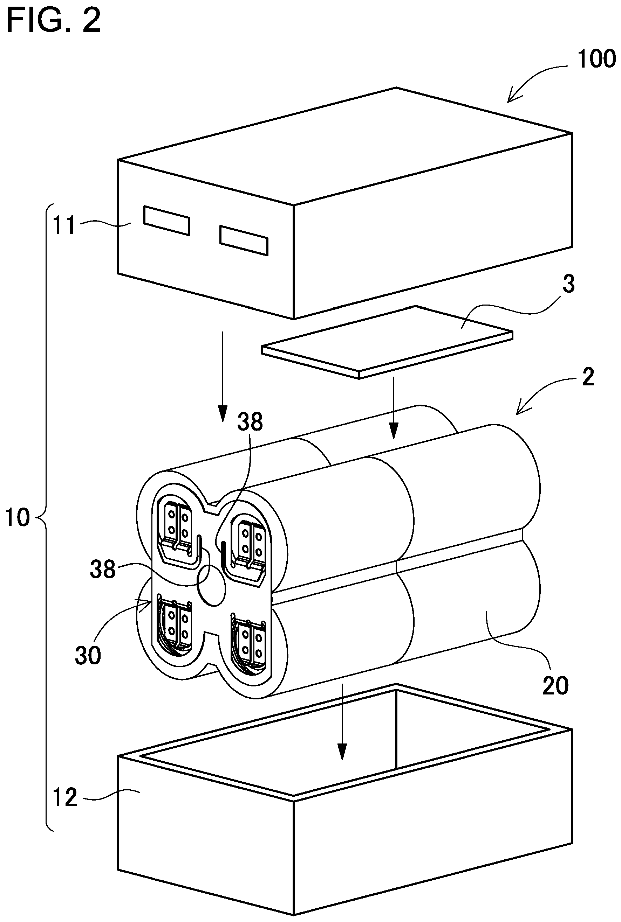

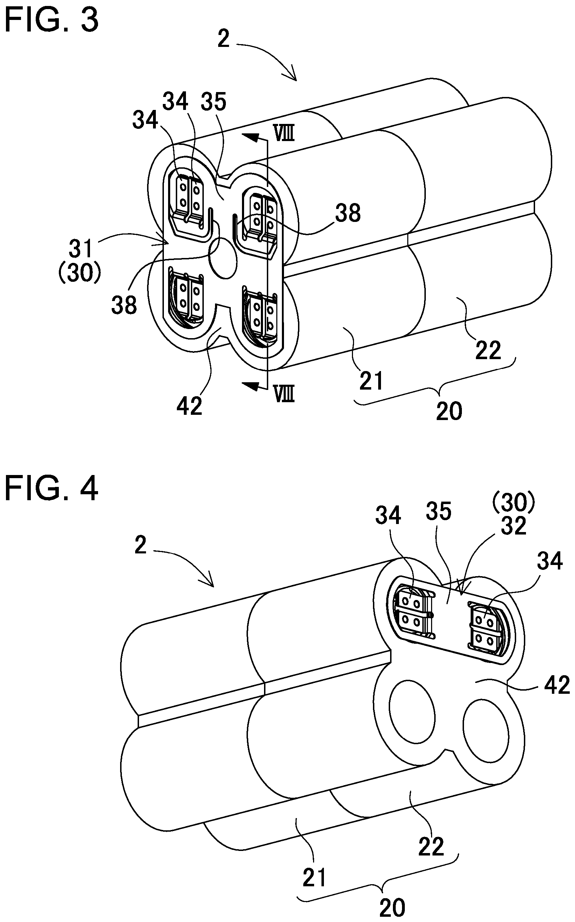

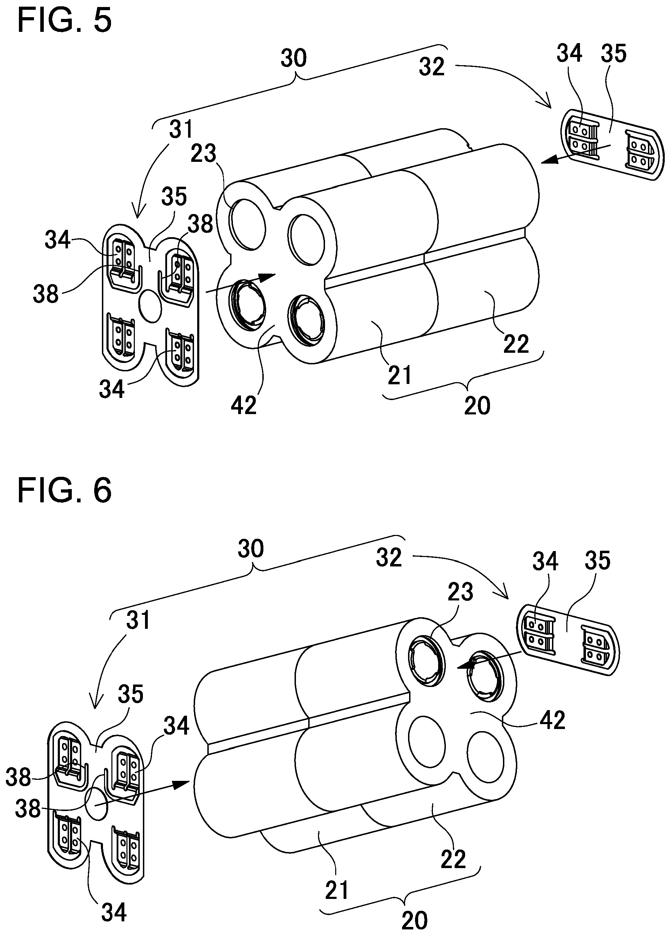

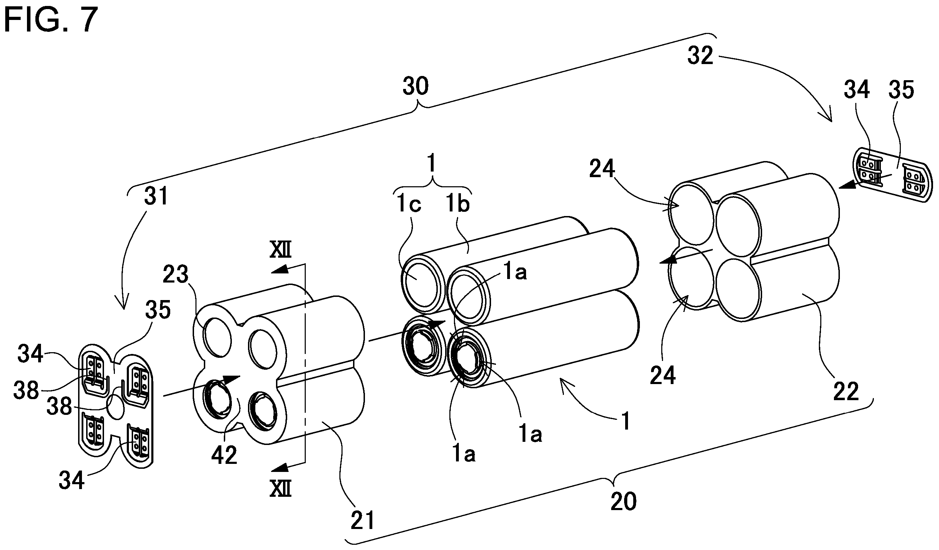

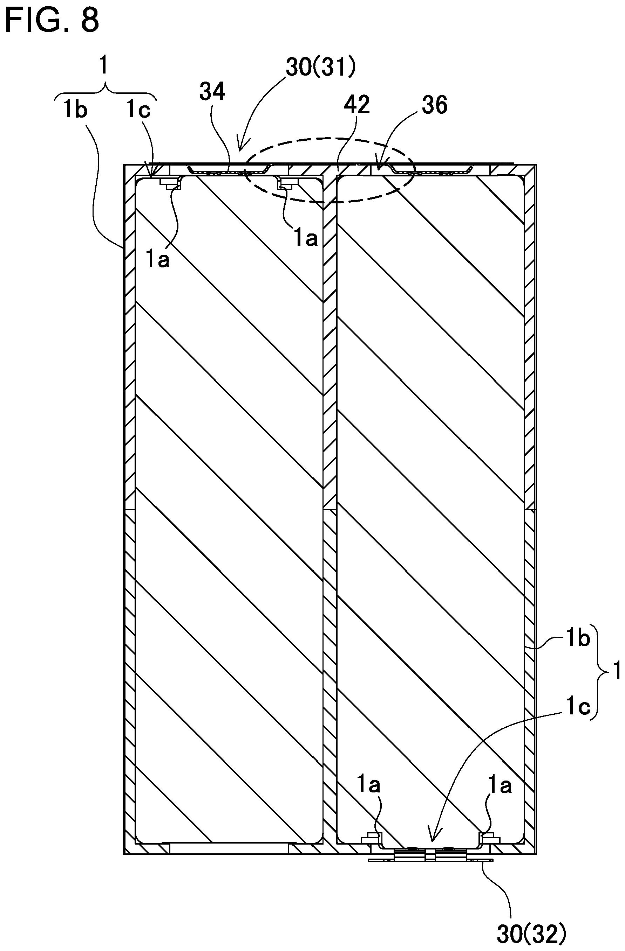

FIGs. 1 to 8 illustrate a battery pack 100 according to Embodiment 1 of the present invention. In these figures, FIG. 1 is a perspective view of a battery pack 100 according to Embodiment 1 of the present invention. FIG. 2 is an exploded perspective view of the battery pack 100 of FIG. 1. FIG. 3 is a perspective view of a battery module 2 of FIG. 2. FIG. 4 is a perspective view of the battery module 2 of FIG. 3, viewed from the back. FIG. 5 is an exploded perspective view of the battery module 2 of FIG. 3 with a lead plate 30 detached. FIG. 6 is an exploded perspective view of the battery module 2 of FIG. 4 with the lead plate 30 detached. FIG. 7 is an exploded perspective view of the battery module of FIG. 5 with a battery holder 20 detached. FIG. 8 is a cross-sectional view of the battery module 2 of FIG. 3 taken along the line VIII-VIII in FIG. 3. The battery pack 100 shown in these figures has an outer case 10 and a battery module 2. The battery module 2 includes one or more secondary battery cells 1.

### (Outer Case 10)

The outer case 10 stores the battery module 2 including one or more secondary battery cells 1, and a circuit board 3. As shown in FIGs. 1, 2, etc., the appearance of the outer case 10 in plan view is a rectangular box extending in one direction. The outer case 10 in the form of a box has a first face and a second face that intersects the first face. In the example in FIG. 1, the top surface in the figure is the first face, and the side surface that extends along the longitudinal direction is the second face. As shown in FIG. 2, etc., a storage space for the battery module 2 and the circuit board 3 is provided inside the outer case 10.

The outer case 10 is divided into two parts, i.e., an upper case 11 and a lower case 12, for example, as shown in FIG. 2. In the upper case 11 and the lower case 12 thus divided, each corner is secured by screwing, fitting, adhesion, ultrasonic welding, or the like. The outer case 10 is not limited to the above configuration. For example, the outer case 10 can be divided into a bottomed tube with one side opened and a lid that closes the opening. The outer case 10 can also be divided into three or more parts.

### (Battery Module 2)

FIGs. 3 to 7 illustrate the battery module 2. As shown in these figures, the battery module 2 includes the plurality of secondary battery cells 1, the battery holder 20 for storing the secondary battery cells 1, and the lead plate 30.

### (Battery Holder 20)

The battery holder 20 includes a plurality of storage tubes 24 for separately storing individual secondary battery cells 1. In the example shown in FIG. 7, the battery holder 20 is divided into two parts, i.e., a first holder 21 and a second holder 22, in the longitudinal direction of the cylindrical secondary battery cell 1, and the secondary battery cell 1 is stored in the storage tube 24 from each end face 1c in the longitudinal direction. Further, each end face of the storage tube 24 has an opening 23 through which the end face 1c of the secondary battery cell 1 is exposed. The battery holder 20 can be formed of a resin with an excellent insulation property, such as polycarbonate.

Further, a circuit board 3 is placed on the upper face of the battery holder 20, as shown in the exploded perspective view in FIG. 2. The battery holder 20 holds the secondary battery cells 1 and the circuit board 3. The battery module 2 is connected to the circuit board 3 via the lead plate 30. The upper face of the battery holder 20 constituting the battery module 2 has a mounting face on which the circuit board 3 is placed.

### (Circuit Board 3)

The battery module 2 is connected to the circuit board 3 via the lead plate 30. The circuit board 3 includes, for example, a charging/discharging circuit that performs charging and discharging of the secondary battery cells 1, and a protection circuit that monitors the voltage and temperature of the secondary battery cells 1 and shuts off the current if abnormality occurs. The circuit board 3 includes a glass epoxy substrate or a similar substrate.

### (Secondary Battery Cell 1)

Each of the one or more secondary battery cells 1 may be one having a square or cylindrical outer can 1b. In the examples shown in FIGs. 7 and 8, four cylindrical secondary battery cells 1 are disposed by stacking two cells on the other two, forming a two-tier lamination. In addition, the secondary battery cells 1 are connected one another in a 2-series 2-parallel configuration. The number of the secondary battery cells, their arrangement, the number of series and parallel connections, and the like are not limited to this example, and any number and arrangement can be used as appropriate. Each secondary battery cell 1 has positive and negative electrodes. The positive or negative electrode is preferably provided on one of the end faces 1c of the secondary battery cell 1. Suitable examples of batteries to be used for the secondary battery cell 1 include known secondary batteries, such as lithium-ion secondary batteries, nickel-metal hydride batteries, or nickel-cadmium batteries.

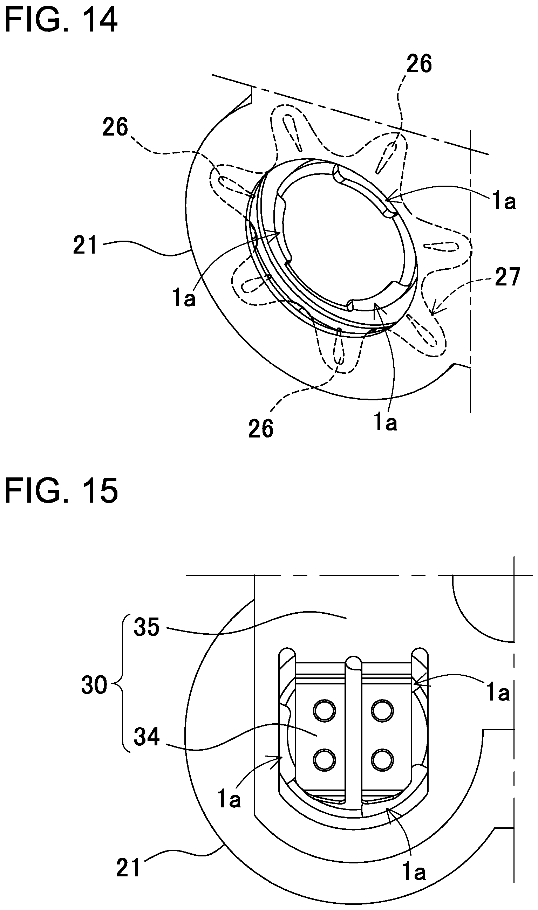

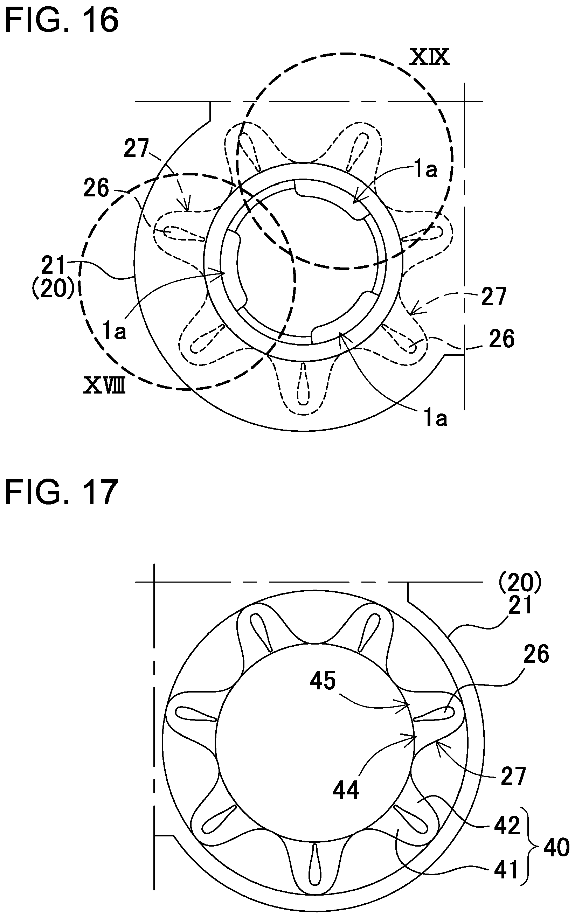

The secondary battery cell 1 also includes a safety mechanism for releasing the internal gas from the outer can 1b if the internal pressure of the outer can 1b increases for some reason. Specifically, the outer can 1b of the secondary battery cell 1 has a gas discharge port 1a, as shown in FIG. 8, etc. The gas discharge port 1a opens in response to an increase in the internal pressure of the outer can 1b, thus releasing the internal gas to the outside. Such a gas discharge port 1a can be formed of, for example, a safety valve or a sealing body provided with a slit for opening the open end. The gas discharge port 1a is surrounded by the battery holder 20. Therefore, the gas discharged from the gas discharge port 1a flows toward the end face 1c of the secondary battery cell 1. The gas discharge port 1a may also be formed into an arc-shaped slit in the plan view of the end face 1c. Further, a plurality of gas discharge ports 1a can be provided. In the examples shown in FIGs. 14, 16, etc., which are described later, three gas discharge ports 1a in the form of slit are provided.

### (Lead Plate 30)

The lead plate 30 is disposed on the side surface of the battery holder 20. The lead plate 30 connects the electrodes on the end faces 1c of the secondary battery cells 1 to each other, thereby connecting the plurality of secondary battery cells 1 in series or in parallel. In the examples shown in FIGs. 3 to 7, etc., the secondary battery cells 1 are connected one another in a 2-series 2-parallel configuration, with a first lead plate 31 coupling the end faces 1c of the four secondary battery cells 1 and a second lead plate 32 coupling the end faces 1c of the two secondary battery cells 1. The number of the secondary battery cells, their arrangement, the number of series and parallel connections, and the like are not limited to this example, and any number and arrangement can be used as appropriate. Each of these lead plates 30 is formed of a metal plate with excellent electrical conductivity, such as a nickel plate. An insulating plate may be provided on each end face of the lead plate 30, if necessary. The insulating plate is formed of a material with excellent insulating property, such as paper or mica.

As shown in FIGs. 3 to 7, each lead plate 30 has a pair of joint pieces 34 and a flat portion 35 having the pair of joint pieces 34 on both sides. The joint pieces 34 join to the respective end faces 1c of the adjacent secondary battery cells 1. The pair of joint pieces 34 is bent on both sides of the flat portion 35. Further, as shown in FIG. 8, the main face of the flat portion 35 is spaced apart from the face where the pair of joint pieces 34 are provided, thereby forming a first space 36 on the back side of the flat portion 35.

### (Fuse Structure 38)

The first lead plate 31 shown in FIG. 7 also includes a fuse structure 38 that fractures when a current of equal to or more than a predetermined value is applied. To provide the fuse structure 38, a region with partially narrow width is formed in a part of the lead plate 30 to increase the resistance. Accordingly, the narrow-width region of the lead plate 30 melts and fractures due to Joule heat when a large current flows, serving as a thermal fuse. With this fuse function, application of a large current that is equal to or more than a predetermined value is regarded as an abnormal state, and the fuse melts and fractures to cut off the current. In this manner, the safety of the battery pack can be improved.

The following describes another case in which the internal pressure of the outer can of one of the secondary battery cells increases due to some abnormality, and the safety mechanism is activated to release high-temperature and high-pressure gas from the gas discharge port. In a configuration in which electrical connection of secondary battery cells 901 is established using the lead plate 930, as in the battery pack 900 according to the comparative example shown in the perspective view in FIG. 9, a plurality of secondary battery cells 901 are held by a battery holder 920 with their end faces aligned and the end faces of adjacent secondary battery cells 901 are exposed and welded together by the lead plate 930. In this configuration, the lead plate 930 in the form of a flat plate is welded over the end face of each secondary battery cell 901. Accordingly, the end face of the positive electrode side is covered by the lead plate 930, as shown in the cross-sectional view in FIG. 10. On the other hand, each secondary battery cell 901 has a gas discharge port 901a, such as a safety valve, which opens in the event that the inside of the outer can becomes highly pressurized and discharges the high-temperature and high-pressure gas inside of the outer can to the outside. The gas discharge port 901a is generally provided at an end face on the positive electrode side.

In such a configuration, if high-temperature and high-pressure gas is discharged from the gas discharge port 901a, as shown in the cross-sectional view in FIG. 11, the lead plate 930 may be directly exposed to the high-temperature and high-pressure gas, which may damage or even break the lead plate 930. This may result in an increase in the resistance of the circuit and the current flow may be stopped. It has been found through tests conducted by the present inventor that such a cut-off of the current flow may result in failure of appropriate operation of the fuse structure 938 provided in the lead plate 930, and the secondary battery cell 901B is energized in other parts to cause propagation of thermal runaway.

### (Path Defining Portion 25)

To avoid such an event, the battery pack 100 according to the present embodiment has a path defining portion 25 that defines a gas discharge path 40 for guiding the gas so as to prevent the high-temperature and high-pressure gas discharged from the gas discharge port 1a from directly impinging on the lead plate 30. The gas discharge path 40 includes a first path 41 and a second path 42. The first path 41 is the gas discharge path 40 along a first direction that extends from the center toward the circumference of the circular shape of the end face 1c of the outer can 1b. On the other hand, the second path 42 is, contrary to the first path 41, the gas discharge path 40 along a second direction that extends from the circumference toward the center of the circular shape of the end face 1c of the outer can 1b. With such a configuration, even if high-temperature and high-pressure gas is unexpectedly discharged from the gas discharge port 1a of one of the secondary battery cells, since the gas can be guided to the gas discharge path 40 to reduce the pressure, it is possible to decrease the amount of the high-temperature and high-pressure gas directly discharged to the lead plate 30. This contributes to improved safety.

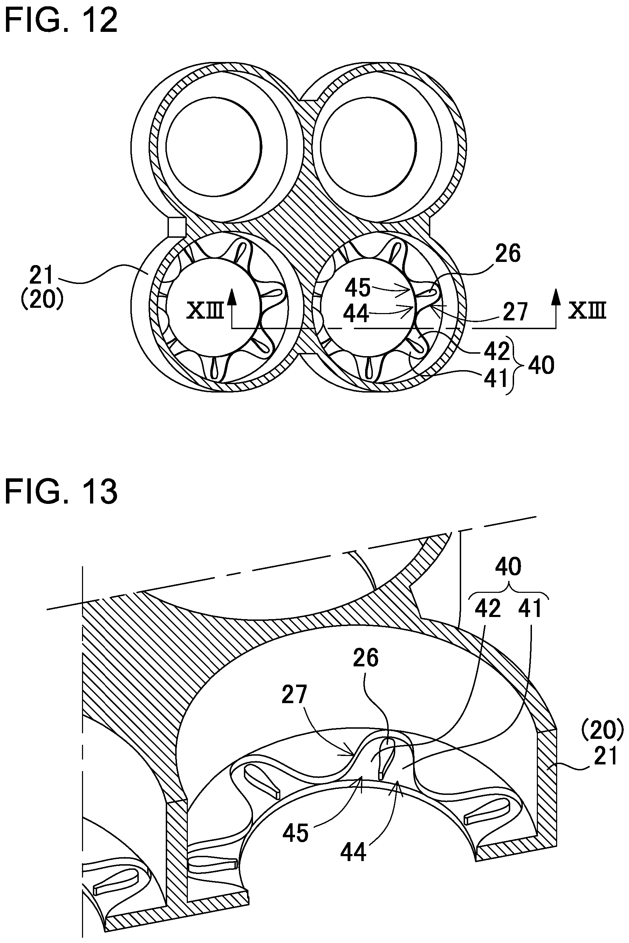

The path defining portion 25 thus described can be provided in the battery holder 20. In the examples shown in FIGs. 12, 13, 14, 15, 16, and 17, a baffle plate 26 and a wall portion 27 are formed as the path defining portion 25 on the inner face of the battery holder 20 facing the end face 1c of the secondary battery cell 1.

### (Baffle Plate 26)

The baffle plate 26 is a member extending between the center and the circumference of the circular shape of the end face 1c of the outer can 1b. It is preferable to provide a plurality of baffle plates 26. In the examples shown in FIG. 17, etc., seven baffle plates 26 are provided on the inner face of the battery holder 20 radially from the center of the circular secondary battery cell 1. Each baffle plate 26 has the first path 41 on one side along the extension direction and the second path 42 on the other side.

### (Wall Portion 27)

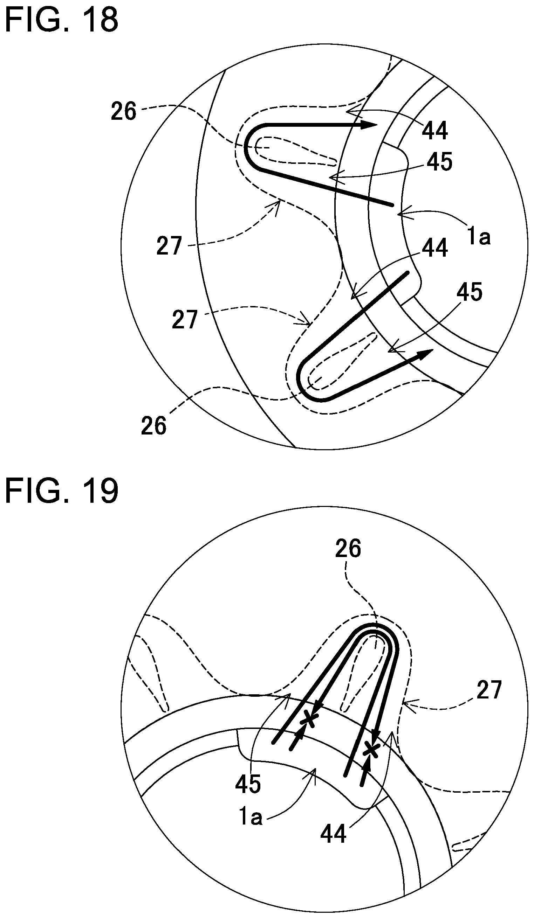

The wall portion 27 is provided spaced apart from each of the baffle plate 26. In the examples shown in FIG. 17, etc., the wall portion 27 is formed in a mountain-like shape along the outer edge of each of the radially disposed baffle plates 26. Between each baffle plate 26 and each wall portion 27, the gas discharge path 40 is formed in a U-shape as shown in FIG. 18 and FIG. 19. The gas discharge path 40 has a star-shaped or petal-like wavy outer shape. The baffle plates 26 and the wall portions 27 are preferably formed integrally with the inner face of the battery holder 20. With this integral form, the path defining portion 25 can be provided at a low cost.

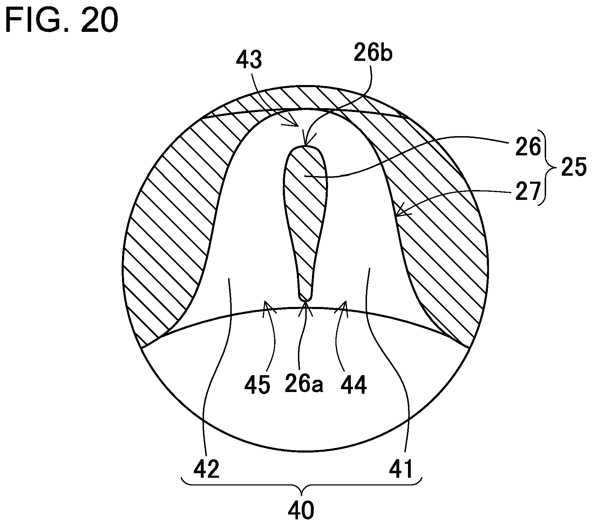

Each baffle plate 26 has a first end face 26a and a second end face 26b as end faces in the longitudinal direction. As shown in FIG. 17, etc., the first end face 26a faces the center of the circular shape of the end face 1c of the outer can 1b. Contrary to the first end face 26a, the second end face 26b faces the circumference of the circular shape of the end face 1c of the outer can 1b. The first path 41 and the second path 42 are provided on both sides of the longitudinal direction extending between these first and second end faces 26a and 26b. In the example shown in the enlarged view of FIG. 20, the first path 41 is on the right, and the second path 42 is on the left. In addition, a first guide port 44 leading to the first path 41 and a second guide port 45 leading to the second path 42 are opened on both sides of the first end face 26a. In the example in FIG. 20, the first guide port 44 is on the right side of the first end face 26a and the second guide port 45 is on the left side of the first end face 26a. Further, on the second end face 26b, a communication portion 43 is formed to establish communication between the first path 41 and the second path 42.

The first path 41 is defined to have an opening width that becomes narrower from the first guide port 44 toward the second end face 26b. The second path 42 is defined to have an opening width that becomes narrower from the second guide port 45 toward the second end face 26b. With this configuration, the flow rate of the high-temperature and high-pressure gas guided from either the first guide port 44 or the second guide port 45 increases while the pressure of the gas decreases due to the gradual reduction of the flow path area. Then, when the gas moves toward the second guide port 45 or the first guide port 44, the gas expands due to the expansion of the flow path area, and the pressure increases. This is a reverse pressure gradient state, which results in an increase in the pressure loss and a decrease in the pressure of the gas. The opening width of the communication portion 43 is narrower than the first guide port 44 and the second guide port 45.

The opening end of the gas discharge port 1a having the first guide port 44 and the second guide port 45 is disposed to face one of the gas discharge ports 1a. This configuration makes it possible to guide the high-temperature and high-pressure gas to the first path 41 and/or the second path 42 from both or either of the first guide port 44 and the second guide port 45, thereby extending the flow path of the gas discharge path 40. It is also possible to cause momentum loss by changing the direction of the gas at the communication portion 43 between the first path 41 and the second path 42, thereby reducing the pressure of the gas. Further, in this configuration with the radially disposed baffle plate 26, a pressure loss is generated in the gas; as a result, the total pressure of the gas upon impinging on the lead plate 30 is reduced, thereby reducing the breakage of the lead plate 30.

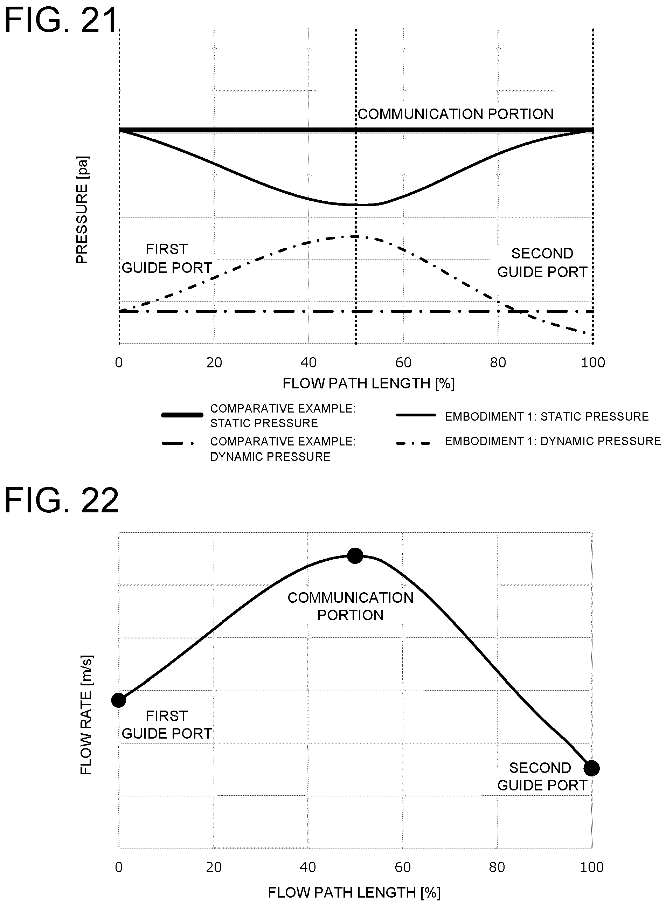

The graph in FIG. 21 shows how the pressure of the gas changes between the battery pack 100 according to Embodiment 1 and the battery pack 900 shown in FIGs. 9 and 10 as a comparative example without the path defining portion 25. In the figure, the static pressure and the dynamic pressure are indicated by a solid line and a dashed line, respectively. As shown in the figure, it can be observed that both static and dynamic pressures are reduced in the battery pack 100 according to Embodiment 1, whereas there are no fluctuations in both static and dynamic pressures in the comparative example. Specifically, when high-temperature and high-pressure gas flows into the first guide port 44, the static pressure is converted to dynamic pressure as the gas moves toward the communication portion 43. Further, after the gas passes through the communication portion 43, the pressure is recovered as the flow path expands and dynamic pressure is converted to static pressure. However, the gas flow does not follow the form of the flow path, causing flow separation and pressure loss. This results in reduction in the pressure.

Further, by guiding the gas from both the first guide port 44 and the second guide port 45, it is possible to cause the high-pressure gases to collide with each other in the middle of the gas guide path to generate a vortex flow, leading to reduction in the pressure. For example, as shown in FIG. 18, if the gas discharge port 1a faces only the first guide port 44 formed on the side of the baffle plate 26 shown lower in the figure, a larger amount of gas flows from the first guide port 44 to the second guide port 45. Further, if the gas discharge port 1a faces only the second guide port 45 formed on the side of the baffle plate 26 shown upper in the figure, a larger amount of gas flows from the second guide port 45 to the first guide port 44. On the other hand, if both the first guide port 44 and the second guide port 45 face the gas discharge port 1a as shown in FIG. 19, the gas is guided to both the first guide port 44 and the second guide port 45. This results in gas collision inside the first path 41 and the second path 42, thereby reducing the pressure.

Further, the first guide port 44 and the second guide port 45 are preferably defined by curved faces. This configuration makes it difficult to generate a pressure loss at the first guide port 44 and the second guide port 45, making it easier to guide the gas to the gas discharge path 40. In contrast, if the first guide port 44 and the second guide port 45 are formed in straight or angular shapes, such as triangular shapes, pressure loss occurs at these ports, causing turbulence that makes it more difficult to guide the gas.

By thus causing pressure loss by the path defining portion 25, the mass flow rate of the gas reflected by the lead plate and flowing toward the adjacent secondary battery cell is reduced. Therefore, an effect of reducing the risk of thermal propagation can be expected.

### (EXAMPLES)

As an example, the graph in FIG. 22 shows an image of flow rate change when gas guided from the first guide port 44 of FIG. 20 is discharged from the second guide port 45 through the communication portion 43.

In the examples shown above, the opening end of the gas discharge port 1a having the first guide port 44 and the second guide port 45 is disposed to face one of the gas discharge ports 1a. In this example, the plurality of baffle plates 26 are disposed spaced apart from each other by a first distance. Also, the plurality of gas discharge ports 1a are spaced apart from each other by a second distance. The first distance is different from the second distance. Also, the number of the gas discharge ports 1a, which is represented by "m", and the number of the baffle plates 26, which is represented by "n", are set to be coprime. With this configuration, the first guide port 44 and the second guide port 45 defined by the baffle plate 26 always face the gas discharge port 1a at a location regardless of the orientation in the rotation direction of the secondary battery cell 1, making it possible to reliably guide the high-temperature and high-pressure gas to the first guide port 44 and the second guide port 45. This results in an advantage that there is no need for setting the relative position of the rotation direction of the secondary battery cell 1 and the baffle plate 26 in the battery pack assembly process, thereby simplifying the battery pack assembly process. In the examples in FIG. 14 and FIG. 16, three slits are provided as the gas discharge port 1a and seven baffle plates 26 are provided. By thus designing the numbers of the gas discharge port 1a and the baffle plate 26 to be coprime, it is possible to always provide a portion where the gas discharge port 1a and the baffle plate 26 face each other at a location on the circumference. As a result, it is possible to dispose one of the gas discharge ports 1a to face one of the baffle plates 26 (i.e., the gas discharge path 40) without setting the orientation in the rotation direction of the secondary battery cell 1. This enables the protection of the lead plate 30 from a decrease in pressure during gas discharge. The path defining portion 25 may also be formed point symmetrically with respect to the center of the circular shape of the end face 1c of the outer can 1b. Similarly, the gas discharge port 1a may be formed point symmetrically with respect to the center of the circular shape of the end face 1c of the outer can 1b.

### [EMBODIMENT 2]

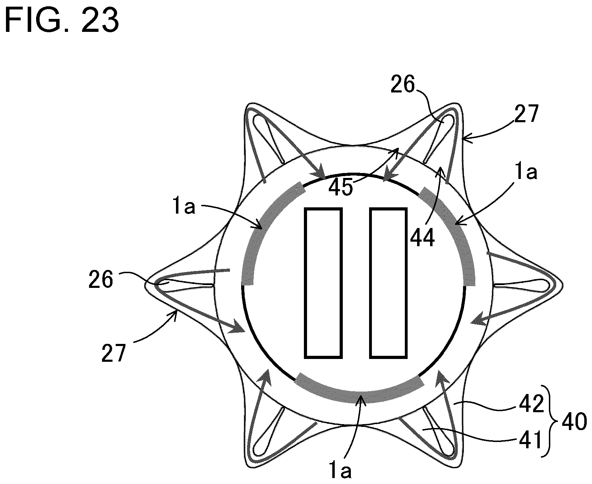

On the other hand, the present disclosure is not limited to a configuration in which the gas discharge ports and the baffle plates are designed with different prime numbers. As long as their relative positioning is made, the gas discharge ports and the baffle plates may be designed with any numbers other than prime numbers. As an example, FIG. 23 shows a battery pack according to Embodiment 2. In the figure, the same members as those described above in Embodiment 1 are given the same reference numbers and detailed descriptions are omitted as appropriate. In the battery pack according to Embodiment 2, three gas discharge ports 1a are provided as in Embodiment 1, while the number of the baffle plates 26B is 6, which is not a prime number. Even in this configuration, by providing a portion where the gas discharge port 1a and the baffle plate 26B face each other by setting the relative position of the gas discharge port 1a and the baffle plate 26B, the path defining portion can serve to reduce the pressure during gas discharge to protect the lead plate.

### [EMBODIMENT 3]

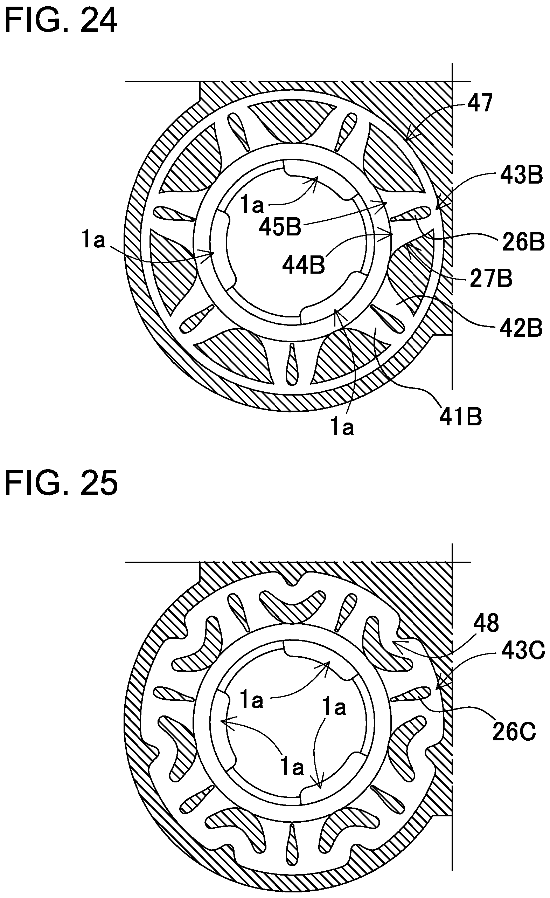

The path defining portion is not limited to the configuration described above, and other patterns can be employed. For example, FIG. 24 shows a battery pack according to Embodiment 3. Again, in this figure, the same members as those described above in Embodiment 1, etc. are given the same reference numbers and detailed descriptions are omitted as appropriate. The battery pack shown in the figure includes, as the path defining portion 25, a wall portion 27B provided along the outer shape of the baffle plate 26B described above, and, in addition, communication portions 43B connected with a cyclic path. The cyclic path is provided as a circular annular path 47. With this configuration, the gas that reaches the communication portion 43B from a first guide port 44B or a second guide port 45B is branched to the annular path 47, and is also guided to a first path 41B or a second path 42B formed around the other adjacent baffle plates 26B. As a result, the gas collides more frequently with other gases guided from the other baffle plates 26B, thereby further reducing the pressure of the gas. In addition, in the configuration of Embodiment 1, some of the baffle plates 26 do not face the gas discharge port 1a, that is, these portions are not utilized; however, in the configuration of Embodiment 3, the gas flows also to the first path 41B and the second path 42B formed by the baffle plates 26B that do not face the gas discharge port 1a through the annular path 47. Therefore, the gas pressure reduction effect can be achieved by utilizing all baffle plates 26B.

### [EMBODIMENT 4]

Further, the cyclic path that connects the communication portions each other is not limited to the circular configuration, and the cyclic path may have other shapes. As an example, FIG. 25 shows a battery pack according to Embodiment 4. Again, in this figure, the same members as those described above in Embodiment 1, etc. are given the same reference numbers and detailed descriptions are omitted as appropriate. In the battery pack shown in this figure, as in Embodiment 2, communication portions 43C are connected by an annular wave-shaped path 48. The wave-shaped path 48 is provided such that a cyclic path is bent in the region between the baffle plates 26C, which was a dead space in the path defining portion 25 of FIG. 24, etc. As a result, the pressure reduction effect can be further enhanced.

### [EMBODIMENT 5]

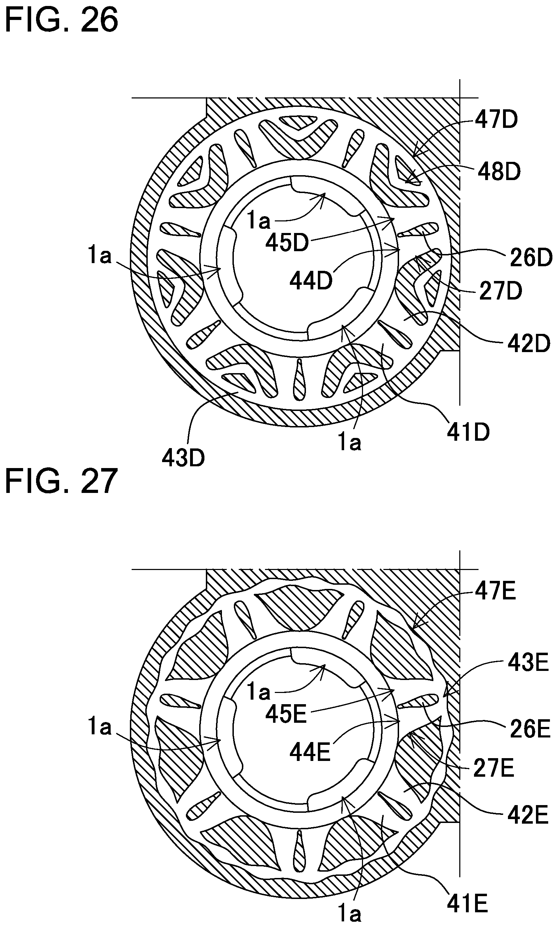

Furthermore, the cyclic path may be formed by both the annular path and the wave-shaped path by combining Embodiments 3 and 4 described above. FIG. 26 illustrates such an example as a battery pack according to Embodiment 5. Again, in this figure, the same members as those described above in Embodiment 1, etc. are given the same reference numbers and detailed descriptions are omitted as appropriate. The battery pack shown in this figure is also configured such that a first guide port 44D and a second guide port 45D are provided between a baffle plate 26D and a wall portion 27D, and a first path 41D and a second path 42D are connected with a communication portion 43D. This battery pack further includes a wave-shaped path 48D to branch the path. The wave-shaped path 48D is similar to that of Embodiment 4 and provided in the middle of an annular path 47D having a similar annular shape to that of Embodiment 3 passing through the communication portion 43D. With this configuration, the cyclic path can be further branched, thereby increasing the pressure loss at the confluence. This further enhances the gas pressure reduction effect.

### [EMBODIMENT 6]

Further, although the width of the cyclic path is uniform in Embodiments 3 and 4 described above, the cyclic path may have a non-uniform width with a partially narrowed portion. FIG. 27 illustrates such an example as a battery pack according to Embodiment 6. Again, in this figure, the same members as those described above in Embodiment 1, etc. are given the same reference numbers and detailed descriptions are omitted as appropriate. The battery pack shown in this figure is also configured such that a first guide port 44E and a second guide port 45E are provided between a baffle plate 26E and a wall portion 27E, and a first path 41E and a second path 42E are connected with a communication portion 43E. In addition, the width of an annular path 47E passing through the communication portion 43E is non-uniform, i.e., the width varies at different positions. This contributes to further increase in pressure loss.

In the above examples, the battery pack is attached to the electrical device to be driven to supply power to the device. Additionally, when the remaining capacity of the battery pack is low or when the battery pack deteriorates over time, the battery pack can be replaced so that the electrical device remains usable. However, the battery pack of the present disclosure is not limited to a replaceable battery pack that typically stores secondary battery cells. The present disclosure is also applicable to embodiments in which secondary battery cells are stored within a casing of an electrical device. In this disclosure, a battery pack simply refers to those in which, at least, secondary battery cells are stored in a case. Therefore, a configuration with built-in secondary battery cells for driving an electrical device stored in a casing of the electrical device itself is also referred to as a battery pack. In other words, the present disclosure is not limited to replaceable battery packs, and is also applicable to electrical devices with built-in secondary battery cells.

### INDUSTRIAL APPLICABILITY

The battery pack according to the present invention can be suitably used for, for example, self-propelled robots for home delivery, electric carts for home delivery and golf courses, electric scooters, construction machinery, as well as a power source for driving vehicles such as hybrid and electric vehicles. In addition, the battery pack according to the present invention can also be appropriately used as a power source for driving electric assist bicycles, a power source for portable electrical devices such as radios, electric cleaners, and power tools, as well as stationary energy storage applications such as a backup power source for servers or a power supply for households, business establishments, and factories.

### REFERENCE SIGNS LIST

100 ... battery pack
1 ... secondary battery cell; 1a ... gas discharge port; 1b ... outer can; 1c ... end face
2 ... battery module
3 ... circuit board
10 ... outer case
11 ... upper case
12 ... lower case
20 ... battery holder
21 ... first holder
22 ... second holder
23 ... opening
24 ... storage tube
25 ... path defining portion
26, 26B, 26C, 26D, 26E ... baffle plate; 26a ... first end face; 26b ... second end face
27, 27B, 27D, 27E ... wall portion
30 ... lead plate
31 ... first lead plate
32 ... second lead plate
34 ... joint piece
35 ... flat portion
36 ... first space
38 ... fuse structure
40 ... gas discharge path
41, 41B, 41D, 41E ... first path
42, 42B, 42D, 42E ... second path
43, 43B, 43C, 43D, 43E ... communication portion
44, 44B, 44D, 44E ... first guide port
45, 45B, 45D, 45E ... second guide port
47, 47D, 47E ... annular path
48 ... wave-shaped path
900 ... battery pack
901, 901A, 901B ... secondary battery cell; 901a ... gas discharge port
920 ... battery holder
938 ... fuse structure

## Claims

1. A battery pack comprising:
a plurality of secondary battery cells, each of which has a cylindrical outer can and comprises one or more gas discharge ports on a circular end face of the outer can;
an outer case that stores the plurality of secondary battery cells; and
one or more lead plates coupled to one or more end faces of the plurality of secondary battery cells,
wherein the battery pack comprises a path defining portion that defines a gas discharge path, disposed to face at least one of the one or more gas discharge ports, and
wherein the path defining portion defines
a first path along a first direction that extends from a center toward a circumference of a circular shape of an end face of the outer can, and
a second path along a second direction that extends from the circumference toward the center of the circular shape of the end face of the outer can.

2. The battery pack according to claim 1, wherein the lead plate includes a fuse structure that fractures when a current of equal to or more than a predetermined value is applied.

3. The battery pack according to claim 1, further comprising:
a battery holder that holds the plurality of secondary battery cells,
wherein the path defining portion is formed on an inner face of the battery holder facing an end face of the secondary battery cells.

4. The battery pack according to claim 1, wherein
the path defining portion comprises one or more baffle plates extending between the center and the circumference of the circular shape of the end face of the outer can,
the first path is provided on one side along an extension direction of the one or more baffle plates and the second path is provided on another side along the extension direction, and
in the one or more baffle plates,
a first guide port leading to the first path and a second guide port leading to the second path are provided respectively on both sides of a first end face that faces the center of the circular shape of the end face of the outer can, and
the first path and the second path are connected on a side of a second end face that faces the circumference of the circular shape of the end face of the outer can.

5. The battery pack according to claim 4, wherein
the first path is defined to have an opening width that becomes narrower from the first guide port toward the side of the second end face, and
the second path is defined to have an opening width that becomes narrower from the second guide port toward the side of the second end face.

6. The battery pack according to claim 4, wherein the first guide port and the second guide port are defined by curved faces.

7. The battery pack according to claim 4, wherein a plurality of the baffle plates are provided.

8. The battery pack according to claim 7, wherein
the plurality of the baffle plates are disposed spaced apart from each other by an equal first distance, and
the one or more gas discharge ports include a plurality of gas discharge ports that are spaced apart from each other by an equal second distance that is different from the first distance.

9. The battery pack according to claim 8, wherein a number "m" that represents the number of the gas discharge ports and a number "n" that represents the number of the baffle plates are coprime.

10. The battery pack according to claim 8, wherein
the baffle plates are radially disposed with respect to the center of the circular shape of the end face of the outer can, and
the path defining portion includes a wall portion that is spaced apart from each of the baffle plates that are radially disposed and formed in a mountain-like shape along an outer edge of each baffle plate, and the gas discharge path is formed in a U-shape between the wall portion and each baffle plate.

11. The battery pack according to claim 10, wherein an opening width between the second end face of each baffle plate and the wall portion is narrower than the first guide port and the second guide port.
